# EUROPÄISCHE PATENTANMELDUNG

(11) **EP 1 001 038 A1**
(43) Veröffentlichungstag der Anmeldung: **17.05.2000**
(21) Anmeldenummer: 99890327.2
(22) Anmeldetag: 19.10.1999
(51) Int. Cl.: C21B 3/08

(54) **Verfahren zum Mahlen von flüssingen Schlacken**

(30) Priorität: 11.11.1998 AT 74498 U
(71) Anmelder: "HOLDERBANK" Financière Glarus AG, 8750 Glarus (CH)
(72) Erfinder: Edlinger, Alfred, 5400 Baden (CH)
(74) Vertreter: Haffner, Thomas M., Dr.

(57) **Zusammenfassung**

Bei einem Verfahren zum Mahlen von flüssigen Schlacken, bei welchem die Schlacken einer Trockengranulation unterworfen und anschließend gemahlen werden, werden die granulierten Schlacken einer mit Dampf betriebenen Strahlmühle (5) zugeführt, wobei der aus der Dampfstrahlmühle (5) abgezogene Dampf über Wärmetauscher (11, 13) zur Erwärmung von Speisewasser für die Dampferzeugung geführt und in der Folge kondensiert wird. Das erwärmte Speisewasser wird in Wärmetauschern der Trockengranulation (1) verdampft und in die Strahlmühle (5) eingespeist, wobei das Schlackengranulat bei Temperaturen von über 250° C der Strahlmühle (5) aufgegeben wird.

## Beschreibung

Die Erfindung bezieht sich auf ein Verfahren zum Mahlen von flüssigen Schlacken, bei welchem die Schlacken einer Trockengranulation unterworfen und anschließend gemahlen werden.

Flüssige Schlacken werden für eine nachfolgende Vermahlung in der Regel einer Granulation unterworfen. Es wurde bereits vorgeschlagen, flüssige Schlacken in flüssigen Medien, wie beispielsweise Wasser, abzuschrecken, um auf diese Weise ein Flüssig-Schlackengranulat zu erzielen, welches in der Folge gemahlen werden kann. Für die Flüssiggranulation eignen sich allerdings nur Schlacken, welche weitestgehend oxidiert sind und deren Anteil an freien Metallen, insbesondere deren Anteil an Eisen so gering ist, daß Knallgasexplosion beim Abschrecken in Wasser mit Sicherheit ausgeschlossen werden kann. Derartige oxidierte Schlacken wurden bereits gemeinsam mit dem beim Abschrecken entstehenden Dampf in Strahlmühlen eingebracht, wobei für derartige Einrichtungen aufwendige Mehrstoffdüsen eingesetzt werden mußten, welche einem relativ hohen Verschleiß ausgesetzt sind. Zwar konnte mit derartigen Einrichtungen der beim Abschrecken gebildete Dampf unmittelbar zum Betrieb einer Dampfstrahlmühle herangezogen werden, das Verfahren ist jedoch den eingangs beschriebenen Beschränkungen unterworfen.

Die Erfindung zielt nun darauf ab, die Vorteile einer mit Dampf betriebenen Strahlmühle für beliebige flüssige Schlacken zu nützen. Der Betrieb einer Strahlmühle mit Dampf als wesentlichem Treibmedium erfordert allerdings relativ hohen Aufwand für die Herstellung des benötigten Dampfes auf dem gewünschten Druckniveau, sodaß eine wirtschaftliche Durchführung eines derartigen Verfahrens in hohem Maße davon abhängt, ob die erforderliche Energie kostengünstig zur Verfügung steht. Die Erfindung zielt nun darauf ab, ein Verfahren der eingangs genannten Art zu schaffen, welches beliebige flüssige Schlacken in einfacher Weise unter Nützung der Vorteile einer mit Dampf betriebenen Strahlmühle zu mahlen erlaubt und ein hohes Maß an Wirtschaftlichkeit der Verfahrensweise gewährleistet. Zur Lösung dieser Aufgabe besteht das erfindungsgemäße Verfahren im wesentlichen darin, daß die granulierten Schlacken einer mit Dampf betriebenen Strahlmühle zugeführt werden, daß der aus der Dampfstrahlmühle abgezogene Dampf über Wärmetauscher zur Erwärmung von Speisewasser für die Dampferzeugung geführt und in der Folge kondensiert wird, daß das erwärmte Speisewasser in Wärmetauschern der Trockengranulation verdampft und in die Strahlmühle eingespeist wird und daß das Schlackengranulat bei Temperaturen von über 250° C der Strahlmühle aufgegeben wird. Dadurch, daß eine Trockengranulation gewählt wurde, entfallen die eingangs beschriebenen Beschränkungen in bezug auf die Schlackenzusammensetzung und es kann eine große Anzahl von Schlacken, deren wirtschaftlicher Einsatz nach entsprechender Zerkleinerung bzw. Mahlung sinnvoll erscheinen, auf diese Weise granuliert werden. Dadurch, daß nun unmittelbar anschließend an die Trockengranulation eine mit Dampf betriebene Strahlmühle vorgesehen ist, läßt sich die Abwärme der Trockengranulation in besonders günstiger Weise nützen, sodaß die Wirtschaftlichkeit des Verfahrens gegeben ist. Zu diesem Zweck wird erfindungsgemäß vorgeschlagen, daß das Speisewasser für die Dampfstrahlmühle in Wärmetauschern der Trockengranulation verdampft wird und in die Strahlmühle eingespeist wird. Dadurch, daß nun unmittelbar anschließend an die Trockengranulation Schlackengranulat bei Temperaturen von über 250° C der Strahlmühle aufgegeben wird, kann die Dampfstrahlmühle bei entsprechend hohem Temperaturniveau betrieben werden, sodaß die für den Betrieb der Dampfstrahlmühle erforderliche Energie in einfacher Weise ergänzt werden kann, wofür die Wärmetauscher der Trockengranulation weitgehend ausreichen. Der aus der Dampfstrahlmühle abgezogene Dampf wird hiebei erfindungsgemäß über Wärmetauscher zur Erwärmung von Speisewasser für die Dampferzeugung geführt und in der Folge kondensiert, sodaß auch dieser kondensierte Dampf aus der Dampfstrahlmühle in einfacher Weise rückgeführt werden kann. Mit Vorteil wird hiebei das Kondensat des aus der Strahlmühle abgezogenen Dampfes nach einer Aufbereitung als Speisewasser rückgeführt.

Eine besonders wirtschaftliche Betriebsweise der erfindungsgemäßen Kombination einer Trockengranulation mit einer nachfolgenden Strahlmühle läßt sich hiebei dadurch sicherstellen, daß das Schlackengranulat bei Temperaturen zwischen 300 und 600° C in die Gegenstrahlmühle eingespeist wird. Das erforderliche Druckniveau für den Betrieb der Dampfstrahlmühle läßt sich mit geringem Energieaufwand dadurch sicherstellen, daß bereits das Speisewasser unter entsprechenden Druck gesetzt wird, wofür mit Vorteil so vorgegangen wird, daß das den Wärmetauschern der Trockengranulation zugeführte Speisewasser unter einen Druck zwischen 10 und 35 bar gesetzt wird.

Mit besonderem Vorteil wird das Verfahren so durchgeführt, daß der Abdampf der Strahlmühle bzw. eines nachgeschalteten Filters zur Abscheidung von Feststoffen über einen Brüdenverdichter geführt und anschließend über einen Wärmetauscher zur Erwärmung von Speisewasser geführt wird. Auf diese Weise kann durch die Erhöhung des Druckes des Abdampfes nach Art einer Wärmepumpe ein Großteil der latenten Verdampfungswärme des Taschenfilters rückgewonnen werden, womit der Wirkungsgrad weiter erhöht werden kann.

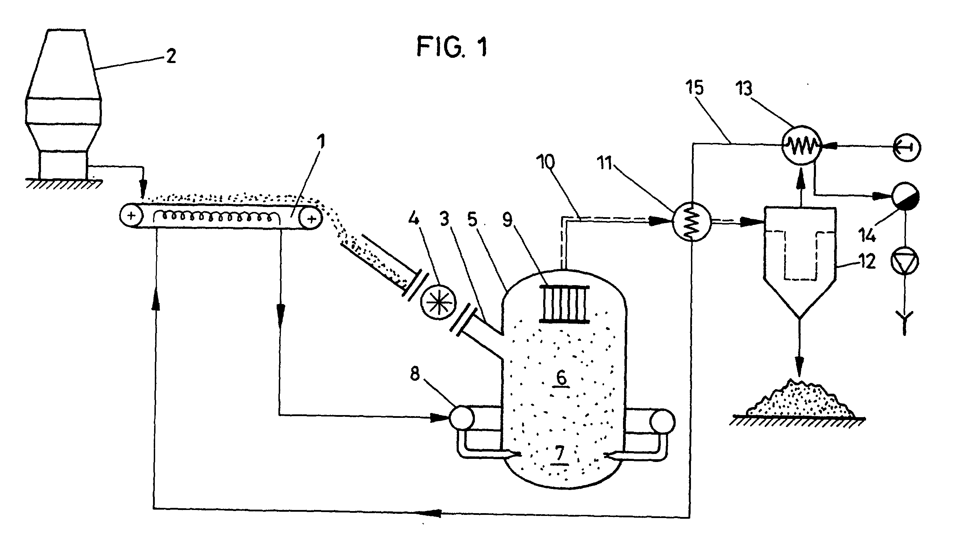

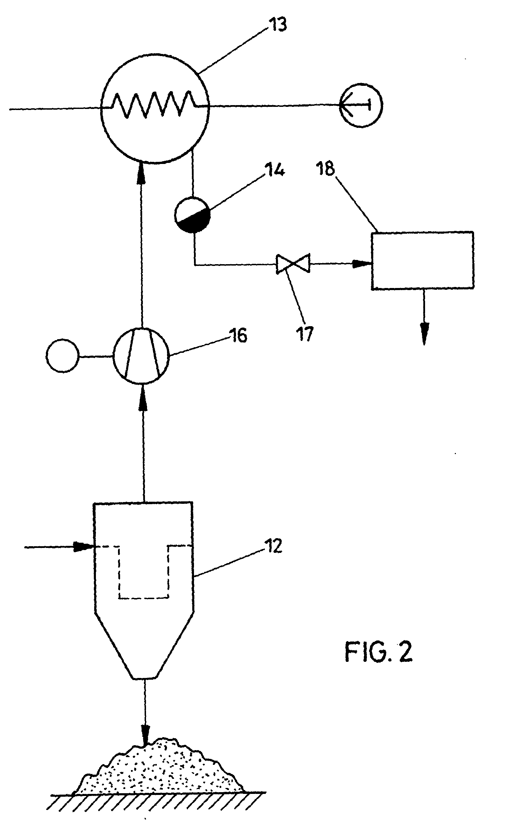

Die Erfindung wird nachfolgend anhand eines in der Zeichnung schematisch dargestellten Ausführungsbeispieles näher erläutert. In dieser zeigen Fig. 1 eine schematische Darstellung der Gesamtanlage und Fig. 2 einen Ausschnitt der in Fig. 1 gezeigten Anlage, bei welcher dem Filter zur Abscheidung von Feststoffen ein Brüdenverdichter nachgeschaltet ist.

In Fig. 1 ist mit 1 ein Trockengranulator bezeichnet, dem flüssige Schlacken aus einem Hochofen 2 bei einer Temperatur von 1500° C zugeführt werden, worauf das Schlackengranulat bei einer Temperatur von 400° C über einen Aufgabestutzen 3 und eine Zellradschleuse 4 einer Gegenstrahlmühle 5 aufgegeben wird. Im Inneren der Gegenstrahlmühle 5 wird eine Wirbelschicht 6 ausgebildet, wobei über eine Ringleitung 8 überhitzter Wasserdampf unter Ausbildung eines Gegenstrommahlraumes 7 eingeblasen wird.

Das in die Gegenstrahlmühle 5 eingebrachte Granulat wird im Mahlraum 7 entsprechend zerkleinert, worauf das Mahlgut gemeinsam mit dem Wasserdampf über einen Sichter 9 und eine Leitung 10 abgezogen und über einen Wärmetauscher 11 geführt wird. In einem Taschenfilter 12 wird das Mahlgut vom Wasserdampf getrennt, worauf der Wasserdampf über einen weiteren Wärmetauscher 13 geführt und kondensiert wird. Das Kondensat wird in einem Flüssigkeitsabscheider 14 vom Feinstaub getrennt und kann anschließend dem Speisewasser für die Gegenstrahlmühle zugefügt werden. Das Speisewasser für die Gegenstrahlmühle wird nach einer Druckerhöhung von 10 bis 35 bar über die Leitung 15 über Wärmetauscher 13 und 11, sowie Wärmetauscher des Trockengranulators 1 geführt, worauf der dort entstandene Dampf in die Gegenstrahlmühle 5 zur Ausbildung eines Gegenstrommahlraumes 7 eingedüst wird.

Fig. 2 zeigt einen Ausschnitt der in Fig. 1 gezeigten Anlage. Für gleiche Teile wurden dabei die Bezugszeichen beibehalten. Zur Erhöhung des Wirkungsgrades ist dem Taschenfilter 12 ein Brüdenverdichter 16 nachgeschaltet. Dem Flüssigkeitsabscheider 14 ist dabei eine Drossel 17 nachgeschaltet, über welche das Kondensat in einen weiteren Luftkühler 18 gelangt und anschließend dem Speisewasser für die Gegenstrahlmühle zugefügt werden kann.

## Patentansprüche

1. Verfahren zum Mahlen von flüssigen Schlacken, bei welchem die Schlacken einer Trockengranulation unterworfen und anschließend gemahlen werden, dadurch gekennzeichnet, daß die granulierten Schlacken einer mit Dampf betriebenen Strahlmühle (5) zugeführt werden, daß der aus der Dampfstrahlmühle (5) abgezogene Dampf über Wärmetauscher (11, 13) zur Erwärmung von Speisewasser für die Dampferzeugung geführt und in der Folge kondensiert wird, daß das erwärmte Speisewasser in Wärmetauschern der Trockengranulation (1) verdampft und in die Strahlmühle (5) eingespeist wird und daß das Schlackengranulat bei Temperaturen von über 250° C der Strahlmühle (5) aufgegeben wird.

2. Verfahren nach Anspruch 1, dadurch gekennzeichnet, daß das Schlackengranulat bei Temperaturen zwischen 300 und 450° C in die Gegenstrahlmühle (5) eingespeist wird.

3. Verfahren nach Anspruch 1 oder 2, dadurch gekennzeichnet, daß das den Wärmetauschern der Trockengranulation (1) zugeführte Speisewasser unter einen Druck zwischen 10 und 35 bar gesetzt wird.

4. Verfahren nach Anspruch 1, 2 oder 3, dadurch gekennzeichnet, daß das Kondensat des aus der Strahlmühle (5) abgezogenen Dampfes als Speisewasser rückgeführt wird.

5. Verfahren nach einem der Ansprüche 1 bis 4, dadurch gekennzeichnet, daß der Abdampf der Strahlmühle (5) bzw. eines nachgeschalteten Filters (12) zur Abscheidung von Feststoffen über einen Brüdenverdichter geführt und anschließend über einen Wärmetauscher zur Erwärmung von Speisewasser geführt wird.
